# EUROPÄISCHE PATENTSCHRIFT

(11) **EP 0 590 379 B1**
(45) Veröffentlichungstag und Bekanntmachung des Hinweises auf die Patenterteilung: **02.07.1997**
(21) Anmeldenummer: 93114514.8
(22) Anmeldetag: 09.09.1993
(51) Int. Cl.: H01S 3/06, H04B 10/16

(54) **Optische Übertragungseinrichtung für die Übertragung optischer Signale im Wellenlängenmultiplex auf einer Vielzahl benachbarter optischer Trägerwellenlängen**
Optical transmission device for the transmission of optical signals in wavelength division multiplexing on a plurality of adjacent optical carrier wavelengths
Dispositif de transmission optique pour la transmission de signaux optiques en multiplexage de longueur d'onde sur une multiplicité de porteuses optiques à longueurs d'onde adjacentes

(30) Priorität: 30.09.1992 DE 4232877
(43) Veröffentlichungstag der Anmeldung: 06.04.1994
(73) Patentinhaber: SIEMENS AKTIENGESELLSCHAFT, 80333 München (DE)
(72) Erfinder: Auracher, Franz, Dr., D-82065 Baierbrunn (DE)

(56) Entgegenhaltungen:
- EP-A- 0 387 075
- EP-A- 0 421 675
- EP-A- 0 485 101
- JOURNAL OF LIGHTWAVE TECHNOLOGY. Bd. 9, Nr. 2 , Februar 1991 , NEW YORK US Seiten 147 - 154 XP000232637 C.R. GILES ET AL. 'Propagation of signal and noise in concatenated erbium-doped fiber optical amplifiers'
- ELECTRONICS LETTERS. Bd. 28, Nr. 15 , 16. Juli 1992 , STEVENAGE GB Seiten 1469 - 1471 XP000307707 H. IZADPANAH ET AL. 'Dispersion compensation in 1310 nm-optimised SMFs using optical equaliser fibre, EDFAs and 1310/1550 nm WDM'
- ELECTRONICS LETTERS. Bd. 28, Nr. 3 , 30. Januar 1992 , STEVENAGE GB Seiten 307 - 309 XP000305982 D.A. CLELAND ET AL. 'Limitation of WDM transmission over 560 km due to degenerate four wave mixing'
- JOURNAL OF LIGHTWAVE TECHNOLOGY. Bd. 9, Nr. 3 , März 1991 , NEW YORK US Seiten 356 - 361 XP000206865 D. MARCUSE 'Single-channel operation in very long nonlinear fibers with optical amplifiers at zero dispersion'
- JOURNAL OF LIGHTWAVE TECHNOLOGY. Bd. 8, Nr. 10 , Oktober 1990 , NEW YORK US Seiten 1548 - 1557 XP171573 A.R. CHRAPLYVY 'Limitations on lightwave communications imposed by optical-fiber nonlinearities'

## Beschreibung

Bei optischen Übertragungsstrecken besteht generell das Bestreben, die Leistungsfähigkeit der Übertragungsstrecke, d.h. den Datendurchsatz bei der Übertragung, zu erhöhen.

Für leistungsfähige leitungsgebundene Übertragungsstrecken bieten sich insbesondere optische Glasfasern an. Es ist bekannt, daß die Bereiche niedriger Dämpfung bei diesen Fasern bei den optischen Wellenlängen 1,3 µm und 1,55 µm - die sog. optischen Fenster - zusammen einer Übertragungsbandbreite von über 30.000 GHz entsprechen. Es ist das Bestreben, einen möglichst großen Teil dieser Bandbreite nutzbar zu machen.

Es sind verschiedene Methoden bekannt, um die Leistungsfähigkeit einer solchen Übertragungsstrecke zu erhöhen.

Der Datendurchsatz kann zunächst durch Erhöhen der Datenrate durch elektrisches oder optisches Zeitmultiplexen von Datensignalen erhöht werden. Dabei tritt einerseits eine Grenze bezüglich der beherrschbaren Datenrate in der Elektronik bzw. Optoelektronik auf, die derzeit maximal 10 Gbit/s, in Zukunft vielleicht 50 bis 100 Gbit/s beträgt, andererseits nimmt die überbrückbare Entfernung aufgrund der abnehmenden Empfängerempfindlichkeit bzw. der zunehmenden dispersionsbedingten Laufzeiteffekte mit zunehmender Datenrate ab. Die erste Beschränkung kann durch den Einsatz von optischen Verstärkern weitgehend aufgehoben werden, die zweite ist jedoch schwieriger zu umgehen: Eine Verbesserung ist durch den Einsatz spezieller, dispersionsarmer Fasern zu erreichen. Wesentlich wirksamer aber auch aufwendiger ist die Verwendung vcn optischen Solitonen zur Übertragung (siehe beispielsweise M. Nakazawa et al: 10 Gbits/s-1200 km single pass soliton data transmission using Erbium-doped fiber amplifiers, Post Deadline Paper PD 11, OFC '92, 2.-7.Febr. 1992, San Jose, CA oder EP-A-0 485 101). Hier werden die Dispersionseffekte durch nichtlineare Effekte auf der Faser kompensiert.

Ein besonders eleganter Weg der Leistungssteigerung der Übertragungsstrecke bezüglich des Datendurchsatzes ist die optische Vielkanaltechnik in Kombination mit einer Zeitmultiplextechnik. Die Leistungsfähigkeit dieser Technik wird aber vor allem durch Kanalnebensprechen aufgrund nichtlinearer Effekte auf der Übertragungsstrecke begrenzt.

Bei der optischen Vielkanaltechnik in Form eines optischen Wellenlangenmultiplex werden die zu übertragenden optischen Signale auf vielen benachbarten optischen Trägerwellenlängen übertragen.

Die Leistungsfähigkeit eines solchen Übertragungssystems wird jedoch durch mehrere Parameter begrenzt: Der nutzbare Teil des optischen Fensters wird vor allem durch die Verfügbarkeit bzw. den Durchstimmbereich der optischen Sender eingeschränkt. Der minimale Kanal- bzw. Trägerwellenlängenabstand ergibt sich aus der Trennschärfe der verfügbaren optischen Empfänger (z.B. Auflösung eines Demultiplexers oder eines optischen Filters beim Direktempfang bzw. der Zwischenfrequenz-Filterbandbreite beim Heterodynempfang), der Bandbreite des modulierten optischen Datenkanals sowie durch Kanalnebensprechen aufgrund von nichtlinearen Effekten auf dem Übertragungsweg.

Gerade das Kanalnebensprechen aufgrund nichtlinearer Effekte stellt bei kleinen Kanalabstanden und hoher Kanalzahl eine starke Einschränkung bei Vielkanalsystemen dar, insbesondere wenn hohe Sendeleistungen eingesetzt werden müssen, weil große Strecken mit hoher Datenrate pro Kanal überbrückt werden sollen. Besonders die Dreiwellenmischung (oft auch als Vierwellenmischung bezeichnet) und die Ramanstreuung dominieren die nichtlinearen Wechselwirkungen bei Vielkanalsystemen. Eine ausführliche Berechnung der Auswirkung dieser Effekte auf Übertragungssysteme mit optischem Heterodynempfang ist z.B. in Andrew R. Chraplyvy: Limitations on Lightwave Communications Imposed by Optical-Fiber Nonlinearities, J. Lightwave Techn. 8 (199) S. 1548-1557 zu finden.

Aus EP-A-0 421 675 ist eine optische Übertragungseinrichtung mit dem Oberbegriff des Patentanspruchs 1 bekannt, die zur Übertragung optischer Signale im Wellenlängenmultiplex auf einer Vielzahl benachbarter optischer Trägerwellenlängen über insbesondere mehr als 40 km Entfernung dient und so optimiert ist, daß die durch nichtlineare Effekte verursachze Leistungsgrenze in Bezug auf den Datendurchsatz möglichst weit nach oben verschoben wird.

Mit dieser Einrichtung ist es möglich, die Begrenzung durch nichtlineare Effekte weitestgehend zu umgehen, wodurch die Leistungsfähigkeit dieser Übertragungseinrichtung soweit wie möglich gesteigert werden kann.

Die erfindungsgemäße Einrichtung ist in Anspruch 1 angegeben Bevorzugte und vorteilhafte Ausgestaltungen der erfindungsgemäßen Einrichtung gehen aus den Ansprüchen 2 bis 5 hervor.

Ist bei der erfindungsgemäßen Einrichtung die Dreiwellenmischung beachtlich oder dominant, ist es zweckmäßig, zur Minimierung der Dreiwellenmischung einen Übertragungswellenleiter relativ hoher Dispersion in Kombination mit einem relativ kurzen Kompensationswellenleiter zu verwenden (Anspruch 3). Mit einem derartigen KompensaLionswellenleiter, vorzugsweise eine optische Kompensationsfaser, kann die Gesamtdispersion der Übertragungsstrecke ausreichend niedrig gehalten werden, während der Übertragungswellenleiter selbst eine möglichst hohe Dispersion aufweisen soll, um die effektive Wechselwirkungslänge für Dreiwellenmischung niedrig zu halten.

Es sei darauf hingewiesen, daß das Vorschalten einer derartigen Kompensationswellenleiter zur Kompensation der Dispersion bei herkömmlichen undotierten Wellenleiter, die nicht als optischer Verstärker wirken, bereits aus C.D. Pool et al: Broadband Dispersion Compensation Using Higher-order Spatial-mode in a Two-mode Fiber, Post Deadline Paper PD13, OFC '92, 2.-7. Febr. 1992, San Jose, CA bekannt ist.

In dem Fall, daß die Dreiwellemmischung beachtlich ist oder dominiert, können erfindungsgemäße auch optische Wellenleiter verwendet werden, wie sie im Anspruch 4 angegeben sind. Durch die Maßnahme nach Anspruch 4, d.h. durch Zusammenschaltung zweier optischer Wellenleiter hoher, aber entgegengesetzter Dispersion kann die effektive Wechselwirkungslänge L_{eff} und die Gesamtdispersion des Übertragungswellenleiters in zulässig kleinen Grenzen gehalten werden.

Vorzugsweise werden gemäß Anspruch 5 optische Fasern oder Faserabschnitte als optische Wellenleiter verwendet.

Die erfindungsgemäße Einrichtung wird vorteilhafterweise in Kombination mit einem optischen Heterodynempfänger angewendet Anspruch 16).

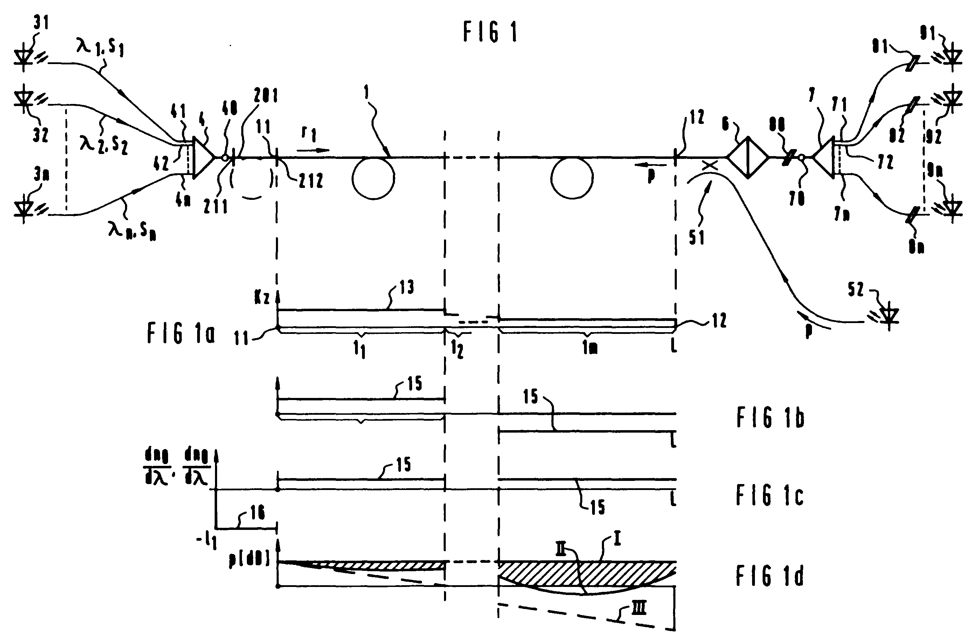

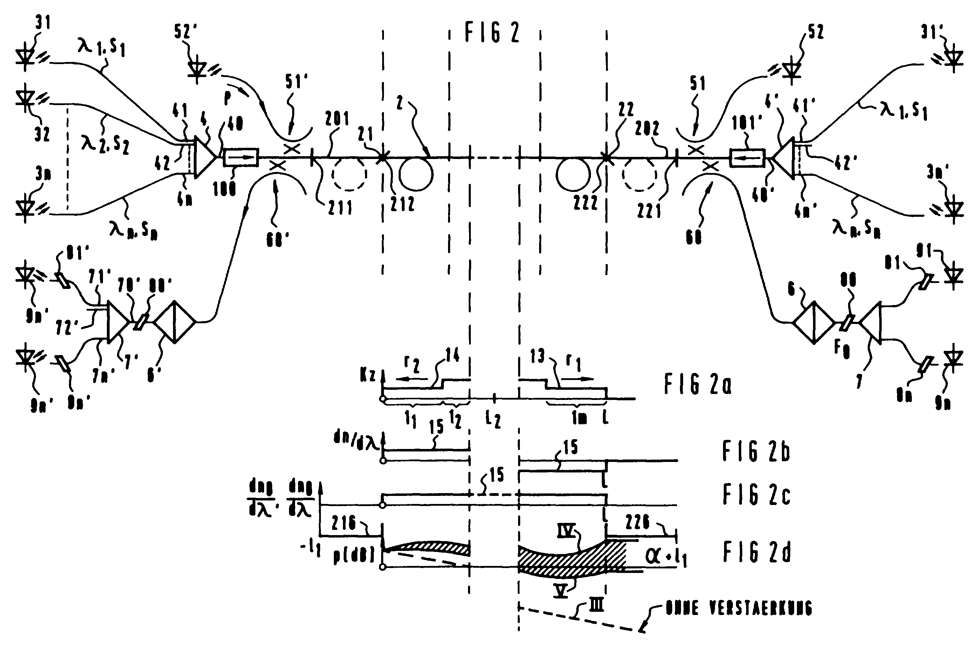

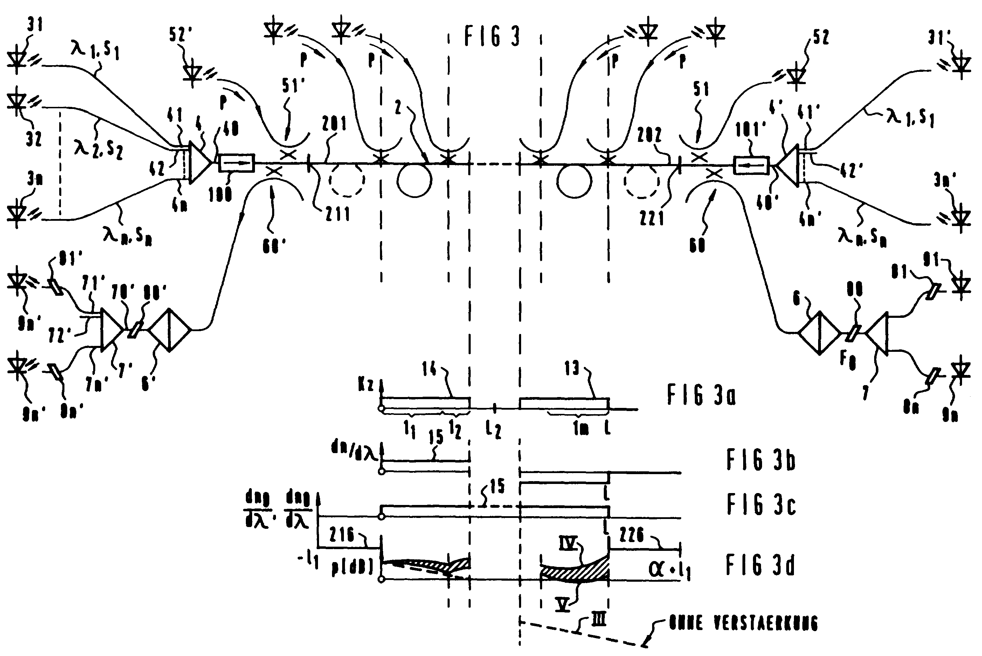

## Patentansprüche

1. Optische Übertragungseinrichtung zur Übertragung optischer Signale (S₁, S₂ ... Sₙ) im Wellenlängenmultiplex auf einer Vielzahl benachbarter optischer Trägerwellenlängen (λ₁, λ₂, ... λₙ), insbesondere über mehr als 10 km Entfernung,
mit einem Übertragungswellenleiter (1, 2) zur Übertragung der optischen Signale (S₁, S₂, ... Sₙ), der einen optischen Wellenleiterverstärker zur Erhöhung eines entlang des Übertragungswellenleiters (1, 2) durch Dämpfung abfallenden Signalpegels (p) der auf dem Übertragungswellenleiter (1; 2) übertragenen optischen Signale (S₁, S₂ ... Sₙ) aufweist,
wobei der optische Wellenleiterverstärker kontinuierlich über im wesentlichen die ganze Länge des Übertragungswellenleiters (1; 2) verteilt ist,
wobei der Übertragungswellenleiter (1; 2) aus einem mit einem Dotierstoff zur Erzielung einer durch optisches Pumpen mit einer Pumpstrahlung (P) anregbaren optischen Verstärkung in dem Übertragungswellenleiter (1; 2) dotierten Wellenleiter besteht, in welchen die Pumpstrahlung (P) zum Pumpen einkoppelbar ist, und
wobei die Pumpstrahlung (P) auf im wesentlichen der ganzen Länge (L) des Übertragungswellenleiters (1; 2) seitlich in diesen Wellenleiter (1; 2) mit konstantem oder örtlich variierendem Koppelgrad einkoppelbar ist,
**dadurch gekennzeichnet,**
daß die Pumpstrahlung in einem entlang des Ubertragungswellenleiters (1; 2) geführten und an diesen Wellenleiter (1; 2) optisch gekoppelten undotierten Wellenleiter geführt ist.

2. Einrichtung nach Anspruch 1,
**dadurch gekennzeichnet,**
das die Konzentration (k_{z}) des Dotierstoffes im Übertragungswellenleiter (1; 2) konstant ist, und daß die Kopplung des undotierten Wellenleiters an den dotierten Übertragungswellenleiter (1; 2) entlang dieses dotierten Wellenleiters (1; 2) derart variiert, daß die Pumpleistung der in den dotierten Übertragungswellenleiter (1; 2) eingekoppelten Pumpstrahlung in diesem dotierten Wellenleiter (1; 2) konstant ist.

3. Einrichtung nach Anspruch 1 oder 2,
**dadurch gekennzeichnet,**
daß an einem Ende (11, 12) der Faser (1; 2) zum Einkoppeln optischer Signale (S1, S2 ... Sn) ein Kompensationswellenleiter (21, 22) mit einer Dispersion (dn₁/dl) mit einem im Vergleich zu einer Dispersion (dn₀/dl) des Übertragungswellenleiters (1; 2) entgegengesetzten Vorzeichen vorgeschaltet ist, wobei die im Vergleich zur Länge (L) des übertragungswellenleiters (1; 2) kürzere Länge (l₁, l₂) des Kompensationswellenleiters (201, 202) und die Dispersion (dn₁/dl) entgegengesetzten Vorzeichens des Kompensationswellenleiters (201, 202) derart gewählt sind, daß die Gesamtdispersion von Übertragungswellenleiter (1; 2) und Kompensationswellenleiter (201, 202) kleiner als die Dispersion (dn₀/dl) des Übertragungswellenleiters (1; 2) ist.

4. Einrichtung nach einem der vorhergehenden Ansprüche,
**dadurch gekennzeichnet,**
daß der Übertragungswellenleiter (1; 2) auf einer Hälfte eine Dispersion eines Vorzeichens und auf der anderen Hälfte eine Dispersion entgegengesetzten Vorzeichens aufweist.

5. Einrichtung nach einem der vorhergehenden Ansprüche,
**dadurch gekennzeichnet,**
daß ein Übertragungswellenleiter (1; 2) aus einer optischen Faser oder mehreren Abschnitten einer optischen Faser besteht.

6. Anwendung einer Einrichtung nach einem der vorhergehenden Ansprüche, in Verbindung mit einem optischen Heterodynempfänger zum Empfang der durch die Einrichtung übertragenen optischen Signale (S₁, S₂ ... Sₙ).

## Claims

1. Optical transmission device for the transmission of optical signals (S₁, S₂ ... Sₙ), using wavelength division multiplex on a multiplicity of adjacent optical carrier wavelengths (λ₁, λ₂, ... λₙ), in particular over distances of more than 10 km, having a transmission waveguide (1, 2) for the transmission of the optical signals (S₁, S₂ ... Sₙ) which has an optical waveguide amplifier for the purpose of increasing a signal level (p) which drops off along the transmission waveguide (1, 2) as a result of attenuation, of the optical signals (S₁, S₂ ... Sₙ) transmitted on the transmission waveguide (1; 2), the optical waveguide amplifier being distributed continuously over substantially the whole length of the transmission waveguide (1; 2),
the transmission waveguide (1; 2) comprising a waveguide which is doped with a dopant in order to achieve an optical amplification in the transmission waveguide (1; 2) which can be excited by optical pumping with a pump radiation (P), into which waveguide the pump radiation (P) can be injected, and
the pump radition (P) being able to be injected laterally into this waveguide (1; 2) with a constant or locally variable degree of coupling over substantially the whole length (L) of the transmission waveguide (1; 2),
characterized in that the pump radiation is guided in an undoped waveguide which is led along the transmission waveguide (1; 2) and is optically coupled to this waveguide (1; 2).

2. Device according to Claim 1, characterized in that the concentration (k_{z}) of the dopant in the transmission waveguide (1; 2) is constant, and in that the coupling of the undoped waveguide to the doped transmission waveguide (1; 2) along this doped waveguide (1; 2) varies in such a way that the pump power of the pump radiation injected into the doped transmission waveguide (1; 2) is constant in this doped waveguide (1; 2).

3. Device according to Claim 1 or 2, characterized in that, at one end (11, 12) of the fibre (1; 2), in order to inject optical signals (S₁, S₂, ... Sₙ), a compensation waveguide (21, 22) having a dispersion (dn₁/dl) with a sign opposed to a dispersion (dn₀/dl) of the transmission waveguide (1; 2) is connected upstream, the lengths (l₁, l₂) , of the compensation waveguide (201, 202), which length is shorter than the length (L) of the transmission waveguide (1; 2), and the dispersion (dn₁/dl) of opposite sign of the compensation waveguide (201, 202) are selected in such a way that the total dispersion of transmission waveguide (1; 2) and compensation waveguide (201, 202) is smaller than the dispersion (dn₀/dl) of the transmission waveguide (1; 2).

4. Device according to one of the preceding claims, characterized in that the transmission waveguide (1; 2) has a dispersion of one sign on one half and a dispersion of opposite sign on the other half.

5. Device according to one of the preceding claims, characterized in that a transmission waveguide (1; 2) is composed of an optical fibre or several sections of an optical fibre.

6. Use of a device according to one of the preceding claims, in conjunction with an optical heterodyne receiver for the reception of optical signals (S₁, S₂, ... Sₙ) transmitted through the device.

## Revendications

1. Dispositif de transmission optique pour la transmission de signaux optiques (S₁, S₂, ... Sₙ) en multiplexage de longueur d'onde sur une multiplicité de porteuses optiques à longeurs d'ondes adjacentes (λ₁, λ₂, ... λₙ), notamment sur une distance supérieure à 10 km, au moyen d'un guide d'ondes de transmission (1, 2) pour la transmission des signaux optiques (S₁, S₂, ... Sₙ), qui présente un amplificateur de guide d'ondes optique pour augmenter un niveau de signal (p) décroissant par affaiblissement le long du guide d'ondes de transmission (1, 2) des signaux optiques (S₁, S₂, ... Sₙ) transmis sur le guide d'ondes de transmission (1,2), l'amplificateur de guide d'ondes optique étant réparti en continu sur essentiellement toute la longueur du guide d'ondes de transmission (1; 2),
le guide d'ondes de transmission (1; 2) étant composé d'un guide d'ondes dopé au moyen d'un agent dopant pour obtenir une amplification optique dans le guide d'ondes de transmission (1; 2) excitable par pompage optique à l'aide d'un rayonnement de pompage (P), dans lequel le rayonnement de pompage (P) peut être couplé pour le pompage, et
le rayonnement de pompage (P) pouvant être couplé sur essentiellement toute la longueur (L) du guide d'ondes de transmission (1; 2) latéralement dans ce guide d'ondes (1; 2) avec un degré de couplage constant ou variant localement,
**caractérisé en ce que,**
le rayonnement de pompage est guidé dans un guide d'ondes non dopé guidé le long du guide d'ondes de transmission (1; 2) et couplé optiquement à ce guide d'ondes (1,2).

2. Dispositif selon la revendication 1,
**caractérisé en ce que,**
la concentration (k_{z}) de l'agent dopant est constante dans le guide d'ondes de transmission (1; 2) et en ce que l'on fait varier le couplage du guide d'ondes non dopé au guide d'ondes de transmission dopé (1; 2) le long de ce guide d'ondes dopé (1; 2), de sorte que le niveau de pompage du rayonnement de pompage couplé dans le guide d'ondes de transmission (1; 2) soit constant dans ce guide d'ondes dopé (1; 2).

3. Dispositif selon les revendication 1 ou 2,
**caractérisé en ce que,**
un guide d'ondes de compensation (21, 22) doté d'une dispersion (dn₁/dl) avec un signe opposé par comparaison avec une dispersion (dn₀/dl) du guide d'ondes de transmission (1; 2) est monté en série à une extrémité (11, 12) de la fibre (1; 2) pour le couplage de signaux optiques (S₁, S₂, ... Sₙ), la longueur (l_{1,} l₂) du guide d'ondes de compensation (201, 202) plus courte par comparaison avec la longueur (L) du guide d'ondes de transmission (1; 2) et la dispersion (dn₁/dₗ) de signe opposé du guide d'ondes de compensation (201, 202) étant sélectionnées de telle sorte que la dispersion totale du guide d'ondes de transmission (1; 2) et du guide d'ondes de compensation (201, 202) est inférieure à la dispersion (dn₀/dₗ) du guide d'ondes de transmission (1; 2).

4. Dispositif selon l'une des revendications précédentes,
**caractérisé en ce que,**
le guide d'ondes de transmission (1; 2) présente une dispersion d'un signe sur une moitié et une dispersion de signe opposé sur l'autre moitié.

5. Dispositif selon l'une des revendications précédentes,
**caractérisé en ce que,**
un guide d'ondes de transmission (1; 2) se compose d'une fibre optique ou de plusieurs sections d'une fibre optique.

6. Application d'un dispositif selon l'une des revendications précédentes en liaison avec un récepteur hétérodyne optique pour la réception des signaux optiques (S₁, S₂, ... Sₙ) transmis par le dispositif.
